# EUROPÄISCHE PATENTSCHRIFT

(11) **EP 2 321 026 B1**
(45) Veröffentlichungstag und Bekanntmachung des Hinweises auf die Patenterteilung: **21.01.2015**
(21) Anmeldenummer: 09777219.8
(22) Anmeldetag: 16.07.2009
(51) Int. Cl.: B01D 33/333

(54) **SIEBBANDMASCHINE**
TRAVELLING BAND SCREEN MACHINE
MACHINE À TOILE PERFORÉE

(30) Priorität: 08.08.2008 DE 102008037059
(43) Veröffentlichungstag der Anmeldung: 18.05.2011
(73) Patentinhaber: Bilfinger Water Technologies GmbH, 65326 Aarbergen (DE)
(72) Erfinder: HEIL, Klaus, 76889 Schweigen-Rechtenbach (DE)
(74) Vertreter: Jany, Peter
(86) Internationale Anmeldenummer: PCT/EP2009/005156
(87) Internationale Veröffentlichungsnummer: WO 2010/015317

(56) Entgegenhaltungen:
- US-A- 4 199 453
- US-A- 5 501 793

## Beschreibung

Die Erfindung betrifft eine Siebbandmaschine zum mechanischen Abscheiden und Herausfördern von festen Bestandteilen, Festkörpern oder Feststoffen aus einem in einem Gerinne fließenden Flüssigkeitsstrom, insbesondere einen Sieb- oder Filterrechen für Prozess-, Kühl- oder Abwasserströmungen oder für Klär- oder Wasserkraftanlagen oder für den Einsatz in einem wasserführenden Kanal eines Kühlwasser-Einlaufbauwerkes eines Kraftwerks.

Derartige Siebbandmaschinen umfassen eine Mehrzahl von Siebfeldern, die ein umlaufendes, in den Flüssigkeitsstrom eintauchendes Endlossiebband bilden, in dem mehrere in Bewegungsrichtung des Endlossiebbandes aufeinanderfolgende, nebeneinander angeordnete Siebfelder sowohl in dem sich abwärts bewegenden Abschnitt des Endlossiebbandes als auch dem sich aufwärts bewegenden Abschnitt des Endlossiebbandes jeweils eine gemeinsame Siebfläche in dem Gerinne bilden, wobei die Strömungsrichtung sowohl für den sich abwärts bewegenden Abschnitt des Endlossiebbandes als auch den sich aufwärts bewegenden Abschnitt des Endlossiebbandes von der Innenseite des Endlossiebbandes durch die Siebfelder zu der Außenseite des Endlossiebbandes gerichtet ist, eine Antriebsvorrichtung zum Antreiben des Endlossiebbandes in seiner Bewegungsrichtung und eine im oberen Umlenkbereich des Endlossiebbandes angeordneten Reinigungsvorrichtung zum Reinigen aus dem Flüssigkeitsstrom herausgehobener Siebfelder in einem Reinigungsbereich der Siebbandmaschine, beispielsweise mittels auf der Außenseite des Endlossiebbandes angeordneter Sprühdüsen oder Druckluftdüsen, sowie einer auf der den Sprühdüsen gegenüberliegenden Innenseite des Endlossiebbandes angeordneten Schmutzsammelrinne zum Auffangen von dem Endlossiebband abgesprühten Schmutzes.

Derartige Siebbandmaschinen werden üblicherweise mit einer Anzahl von Siebfeldern versehen, die in der Regel untereinander verkettet sind und ein umlaufendes, in den Flüssigkeitsstrom eintauchendes Endlossiebband bilden, sowie mit einem Antrieb für das Endlossiebband, wodurch das Abscheiden und Herausfördern der Feststoffe aus dem Flüssigkeitsstrom vorzugsweise kontinuierlich erfolgen kann. Die Siebfelder weisen Siebeinsätze zum Abtrennen von Feststoffen aus dem Flüssigkeitsstrom auf, wobei die Feststoffe die Siebbandmaschine nicht passieren können, sofern ihre Abmessungen größer als die Spalt- oder Maschenweite der Siebeinsätze sind und sich somit an den Siebfeldern abscheiden. Es können verschiedenste Siebeinsätze verwendet werden, beispielsweise Siebgewebe, perforierte Siebplatten, Spaltsiebe aus Einzelstäben, wobei die Einzelstäbe ggf. nicht rund sind sondern ein optimiertes Profil aufweisen, Siebroste oder sonstige beliebige zur Filtration geeignete Siebmaterialien.

Durch die Umlaufbewegung des Endlossiebbandes werden die an den Siebfeldern abgeschiedenen Feststoffe aus der Flüssigkeitsströmung nach oben gefördert und an einer über dem Wasserspiegel liegenden Abwurfstelle von den Siebfeldern abgeworfen oder abgenommen. Mittels Abspritzen der Siebfelder an der Abwurfstelle kann eine vollständige Siebfeldabreinigung erfolgen, bevor die Siebfelder wieder in den Flüssigkeitsstrom eintauchen.

Solche Siebbandmaschinen sind in verschiedenen Ausgestaltungen bekannt, die sich hinsichtlich der Durchströmungsrichtungen der aufwärts und abwärts bewegten Abschnitte des Endlossiebbandes unterscheiden. Es gibt die Varianten "querdurchströmt", "von "außen nach innen" und "von innen nach außen". Bei der Bauartvariante "querdurchströmt" sind die Siebfelder quer zur Strömungsrichtung des Gerinnes angeordnet und die sich abwärts bewegenden Siebfelder sind in Strömungsrichtung hinter den sich aufwärts bewegenden Siebfeldern angeordnet. Bei den Bauartvarianten "außen nach innen" und "von innen nach außen" sind die Siebfelder in der Strömungsrichtung des Gerinnes angeordnet. Bei der Bauart "außen nach innen" ist die Schmutzwasserseite jeweils die Außenseite der sich aufwärts und abwärts bewegenden Abschnitte und die Reinwasserseite ist der Innenraum zwischen den beiden Abschnitten, bei der Bauart "von innen nach außen" ist dies umgekehrt.

Die Erfindung bezeiht sich auf die Bauart "von innen nach außen", d.h. auf eine Siebbandmaschine, bei der die Strömungsrichtung sowohl für den sich abwärts bewegenden Abschnitt des Endlossiebbandes als auch den sich aufwärts bewegenden Abschnitt des Endlossiebbandes von der Innenseite des Endlossiebbandes durch die Siebfelder zu der Außenseite des Endlossiebbandes gerichtet ist. Diese Bauart ist bevorzugt, weil sie einen geringen Druckverlust in der Flüssigkeitsströmung verursacht, bleibende Ablagerungen auf dem Grund vermeidet und eine bedarfsgerechte Schmutzabtrennung vom Endlossiebband ermöglicht.

Weitere technisch und praktisch bedeutsame Unterschiede zwischen einer querdurchströmten Siebbandmaschine, wie sie beispielsweise aus der Druckschrift US 5,501,793 oder der Druckschrift US 6,187,184 B1 bekannt ist, und einer gattungsgemäßen Siebbandmaschine der Bauart "von innen nach außen" sind folgende. Bei querdurchströmten Siebbandmaschinen setzt sich der Schmutz auf der Außenseite des Siebbandes ab und wird demzufolge, nachdem er mittels des Siebbandes herausgefördert wurde, mit einer auf die Innenseite des Siebbandes einwirkenden Reinigungsvorrichtung von innen nach außen von dem Siebband abgesprüht. Die Sprühdüsen sind also zwischen dem sich aufwärts bewegenden und dem sich abwärts bewegenden Abschnitt des Siebbandes angeordnet, also "innen", und sprühen den Schmutz nach "außen".

Bei einer Siebbandmaschine der Bauart "von innen nach außen" setzt sich der Schmutz dagegen auf der Innenseite des Siebbandes ab und wird demzufolge mittels einer von außen einwirkenden Reinigungsvorrichtung von außen nach innen abgesprüht. Eine Siebbandmaschine der Bauart "von innen nach außen" umfasst also eine im oberen Umlenkbereich des Endlossiebbandes angeordnete Reinigungsvorrichtung zum Reinigen aus dem Flüssigkeitsstrom herausgehobener Siebfelder in einem Reinigungsbereich der Siebbandmaschine mittels auf der Außenseite des Endlossiebbandes angeordneter Sprühdüsen oder Druckluftdüsen sowie eine auf der den Sprühdüsen oder Druckluftdüsen gegenüberliegenden Innenseite des Endlossiebbandes angeordnete Schmutzsammelrinne zum Auffangen von dem Endlossiebband abgesprühten Schmutzes.

Somit unterscheiden sich Siebbandmaschinen der Bauarten "querdurchströmt" und "von innen nach außen" sowohl hinsichtlich der Durchströmungsrichtung als auch hinsichtlich der Reinigungsrichtung.

Die vorstehend erläuterten Unterschiede zwischen querdurchströmten und von innen nach außen durchströmten Siebbandmaschinen sind technisch und wirtschaftlich bedeutsam. Querdurchströmte Siebbandmaschinen weisen gegenüber von innen nach außen durchströmten Siebbandmaschinen folgende Nachteile auf:
- Bei querdurchströmten Siebbandmaschinen tragen nur die stromaufwärts liegenden, aufwärts bewegten Siebfelder zum Siebvorgang bei. Die stromabwärts liegenden, abwärts bewegten Siebfelder tragen nicht zur Siebwirkung bei, da sie stromabwärts von den aufwärts bewegten Siebfeldern liegen. Dennoch muss die Strömung die zwei aufeinander folgenden Abschnitte mit Siebfeldern durchströmen, was einen höheren Druckverlust in der Flüssigkeitsströmung verursacht. Bei gattungsgemäßen Siebbandmaschinen sind sowohl die aufwärts als auch die abwärts bewegten Siebfelder für das Sieben wirksam.

- Bei querdurchströmten Siebbandmaschinen können nur Flachsiebe eingesetzt werden, andernfalls würde beispielsweise das Abreinigen mit einer Sprühvorrichtung nicht mehr funktionieren. Bei gattungsgemäßen Siebbandmaschinen können auch Formsiebe, beispielsweise Dachsiebe eingesetzt werden, die eine größere Filterfläche haben.
- Bei querdurchströmten Siebbandmaschinen ist die maximal zur Verfügung stellbare Filterfläche durch die Kanalbreite des Gerinnes beschränkt, da die Siebfelder quer zur Strömungsrichtung angeordnet werden. Bei gattungsgemäßen Siebbandmaschinen gibt es keine derartige Beschränkung; die gesamte Filterfläche kann beliebig groß gemacht werden, da die Siebfelder sich in Strömungsrichtung erstreckend eingebaut werden und somit beliebig lang gemacht werden können.
- Bei querdurchströmten Siebbandmaschinen kann es zu Verschmutzungen der Kanalsohle und zum Übertragen von Schmutzfracht auf die Reinwasserseite kommen, bei gattungsgemäßen Siebbandmaschinen ist dies weitgehend ausgeschlossen.

Aufgrund der technischen Unterschiede und der damit verbundenen Vorteile sind von querdurchströmten Siebbandmaschinen bekannte weitere Ausgestaltungen nicht ohne weiteres auf von innen nach außen durchströmte Siebbandmaschinen übertragbar.

Aus der US 4,199,453 ist eine Siebbandmaschine bekannt, die im oberen Umlenkbereich einen einzigen, durch ein Kettenrad gebildeten Umlenkbogen mit konstantem Radius aufweist. Sie umfasst eine Auffangsammelschiene für Fische, die in einer Schmutzsammelrinne ausgebildet ist. Siebbandmaschinen der oben erläuterten Art sind beispielsweise aus folgenden Literaturstellen bekannt: AT 199573, DE 533 243 A, DE 1 051 810 A, DE 1 083 231 A, DE 1 942 234 A, DE 39 32 922 C1, DE 44 43 091 C1 (in der Bauweise als Trommelsieb), US 4,812,231 und EP 0 913 182 A1.

Bei derartigen Siebbandmaschinen stellt sich das Problem, dass sich nicht nur feste Bestandteile, Festkörper oder Feststoffe in den Siebfeldern festsetzen und durch die Siebbandmaschine aus dem Gerinne ausgesiebt und ausgetragen werden, sondern sich auch Wassertiere wie Fische, Krebse, Larven etc. in dem Siebeinsatz der Siebfelder oder in darin abgeschiedenen Feststoffen verfangen und zusammen mit diesen Feststoffen aus dem Gerinne ausgesiebt und in die Schmutzsammelrinne transportiert und entsorgt werden. Dies ist aus ökologischen Gründen und Gründen des Tierschutzes nachteilig. Auch wenn die Wassertiere wieder mittels aufwendiger Sortiermaßnahmen wieder aus der Schmutzsammelrinne aussortiert und nicht zusammen mit dem herausgesiebten Schmutz entsorgt, sondern auf der Schmutzwasser- und/oder der Reinwasserseite wieder in das Gerinne zurückgeführt würden, wofür keine ökonomische Lösung zur Verfügung steht, würde ein großer Teil der Wassertiere durch die Einwirkung der Sprühdüsen und das gemeinsame Aufschlagen mit abgeschiedenen Festkörpern wie Ästen etc. in der Schmutzsammelrinne verletzt oder getötet werden.

Aus diesem Grund werden im Stand der Technik Anstrengungen unternommen, um mittels Vorsiebeinrichtungen oder elektrischer Fischscheuchanlagen zu verhindern, dass Wassertiere in die Siebbandmaschine gelangen und von dieser aus dem Gerinne herausgefördert werden. Diese Einrichtungen haben jedoch nur eine eingeschränkte Wirkung, so dass es in der Praxis durch den Betrieb der Siebbandmaschine in einem nicht erwünschten Ausmaß zu einem Austrag von Wassertieren aus dem Gerinne kommt.

Ausgehend von diesem Stand der Technik liegt der Erfindung die Aufgabe zugrunde, eine Siebbandmaschine der eingangs genannten Art zu schaffen, die eine möglichst schonende Behandlung durch die Siebbandmaschine aus dem Gerinne herausgeförderter Wassertiere und deren Rückführung in das Gerinne ermöglicht.

Diese Aufgabe wird erfindungsgemäß durch eine Siebbandmaschine mit den Merkmalen des Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Die Verkippung des Siebfeldes und der Auffangvertiefung wird dabei dadurch herbeigeführt, dass das Siebfeld und die von dem Siebfeld umfasste Auffangvertiefung der durch die obere Umlenkung des Endlossiebbandes, d.h. der Kettenumlenkung vorgegebenen Bahnkurve folgen und dabei geneigt werden. Dabei werden die Auffangvertiefungen vorzugsweise selbstständig entleert, ohne dass eine zusätzliche Verkippung der Auffangvertiefungen und/oder der Siebfelder gegenüber dem Endlossiebband bzw. der Kette herbeigeführt wird. In besonderen Ausführungsformen sind auch solche zusätzlichen Kippvorrichtungen möglich, sie sind aber i.d.R. nicht erforderlich, da die Auffangvorrichtungen auch in einer relativ zu dem Endlossiebband festen Position durch die Umlenkung des Endlossiebband gekippt und ausgeleert werden.

Im Rahmen der Erfindung hat sich gezeigt, dass mittels erfindungsgemäßer Fischheberinnen mit Auffangvertiefungen, die auch als Taschen, Rinnen oder Schalen bezeichnet werden könnten, ein schonendes Herausheben der Wassertiere in den mit Wasser gefüllten Auffangvertiefungen und eine schonende Entleerung der Fischheberinnen mit einer Rückführung der Wassertiere in das Gerinne, stromaufwärts oder stromabwärts von der Siebbandmaschine, d.h. auf der Schmutzwasserseite oder der Reinwasserseite des Endlossiebbandes möglich ist.

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. Es zeigen:
- Figur 1: einen vertikalen Schnitt durch eine Siebbandmaschine nach dem Stand der Technik,
- Figur 2: einen horizontalen Schnitt zu Figur 1,
- Figur 3: einen vertikalen Schnitt des oberen Umlenkbereichs der Siebbandmaschine von Figur 1,
- Figur 4: einen vertikalen Schnitt des oberen Umlenkbereichs einer Siebbandmaschine,
- Figur 5: einen vertikalen Schnitt des oberen Umlenkbereichs einer Ausführungsform einer erfindungsgemäßen Siebbandmaschine,
- Figur 6: einen vertikalen Schnitt durch ein erstes Siebfeld mit einer Fischheberinne und
- Figur 7: einen vertikalen Schnitt durch ein zweites Siebfeld mit einer Fischheberinne.

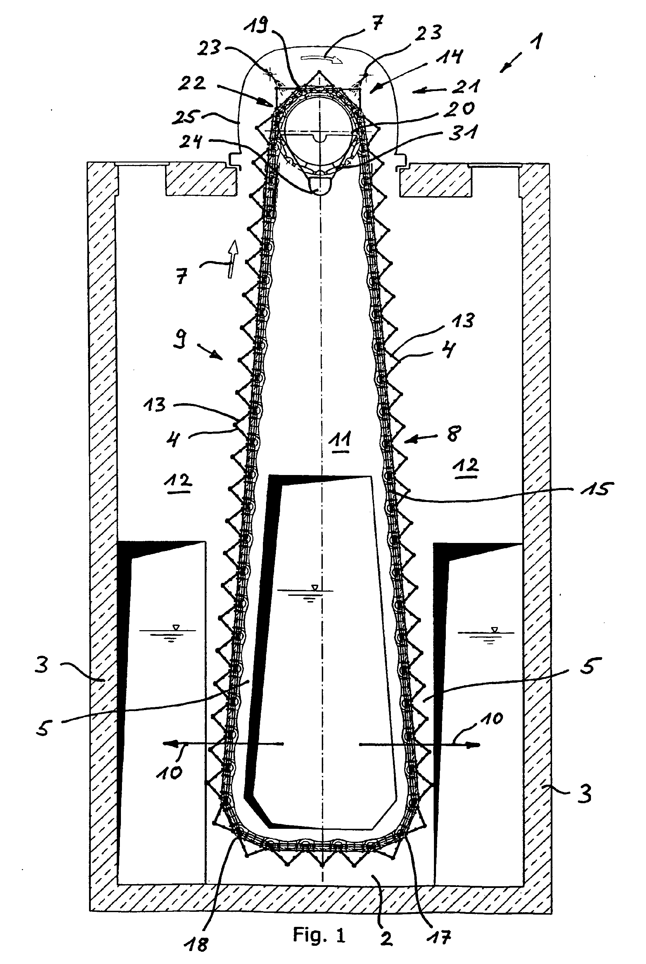

Die Figur 1 zeigt in einem vertikalen Schnitt eine Siebbandmaschine 1 zum mechanischen Abscheiden und Herausfördern von festen Bestandteilen, Festkörpern oder Feststoffen aus einem in einem Gerinne fließenden Flüssigkeitsstrom. Eine solche Siebbandmaschine 1 ist beispielsweise ein Sieb- oder Filterrechen für Prozess-, Kühl- oder Abwasserströmungen oder für Klär- oder Wasserkraftanlagen oder für den Einsatz in einem wasserführenden Kanal 2 eines Kühlwasser-Einlaufbauwerkes 3 eines Kraftwerks, einer petrochemischen oder Meerwasserentsalzungsanlage, eines Stahlwerkes oder einer sonstigen Industrieanlage. Der Siebung kommt als letzter Reinigungsstufe im Wassereinlauf eine besondere Bedeutung zu, denn nachgeschaltete Anlagen wie Pumpen und Kondensatoren müssen zuverlässig gegen Störungen durch im Wasser enthaltene feste Bestandteile geschützt werden, die durch die Siebbandmaschine 1 abgeschieden werden.

Derartige Siebbandmaschinen 1 ermöglichen eine hohe Durchsatzleistung von typischerweise bis 100.000 m³/h bei geringstem Bauvolumen. Typische Auslegungswerte sind: Maschinenlänge (in Strömungsrichtung) 1,0 - 4,5 m, Kanalbreite (quer zur Strömungsrichtung) 2,5 - 7,0 m, Kammertiefe bis 20 m, Bauhöhe über Flur 1,6 - 2,2 m und Maschenweite 0,2 - 10 mm.

Die Siebbandmaschine 1 umfasst eine Mehrzahl von Siebfeldern 4, die ein umlaufendes, in den Flüssigkeitsstrom 5 eintauchendes Endlossiebband 6 bilden, in dem mehrere in Bewegungsrichtung 7 des Endlossiebbandes 6 aufeinanderfolgende, nebeneinander angeordnete Siebfelder 4 sowohl in dem sich abwärts bewegenden Abschnitt 8 des Endlossiebbandes 6 als auch dem sich aufwärts bewegenden Abschnitt 9 des Endlossiebbandes 6 jeweils eine gemeinsame Siebfläche in dem Kanal 2 bzw. Flüssigkeitsstrom 5 bilden.

Die Strömungsrichtung 10 durch die Siebfelder 4 ist sowohl für den sich abwärts bewegenden Abschnitt 8 des Endlossiebbandes 6 als auch den sich aufwärts bewegenden Abschnitt 9 des Endlossiebbandes 6 von der Innenseite 11 des Endlossiebbandes 6 durch die Siebfelder 4 zu der Außenseite 12 des Endlossiebbandes 6 gerichtet. Diese Ausführungsform der Durchströmung der Siebfelder einer Siebbandmaschine 1 bezeichnet man als "von innen nach außen". Dementsprechend ist die Innenseite 11 des Endlossiebbandes 6 die Schmutzwasserseite und die Außenseite 12 des Endlossiebbandes 6 die Reinwasserseite der Siebfelder 4, des Endlossiebbandes 6 und der Siebbandmaschine 1.

Die Siebfelder 4 werden auf der Schmutzwasserseite mit dem zu reinigenden Wasser angeströmt, der Schmutz setzt sich auf der Innenseite der Siebfelder 4, die hierzu einen Siebeinsatz 13 aufweisen, ab, und das gesiebte bzw. gefilterte Wasser tritt auf der Reinwasserseite der Siebfelder 4 aus. Der in den Siebfeldern 4 aufgefangene Schmutz wird durch die Umlaufbewegung des Endlossiebbandes 6 in der Bewegungsrichtung 7 mit dem aufwärts bewegten Abschnitt 9 aus dem Flüssigkeitsstrom 5 herausgehoben und zu einem Reinigungsbereich 14 gefördert, wo er von dem Endlossiebband 6 abgetrennt wird.

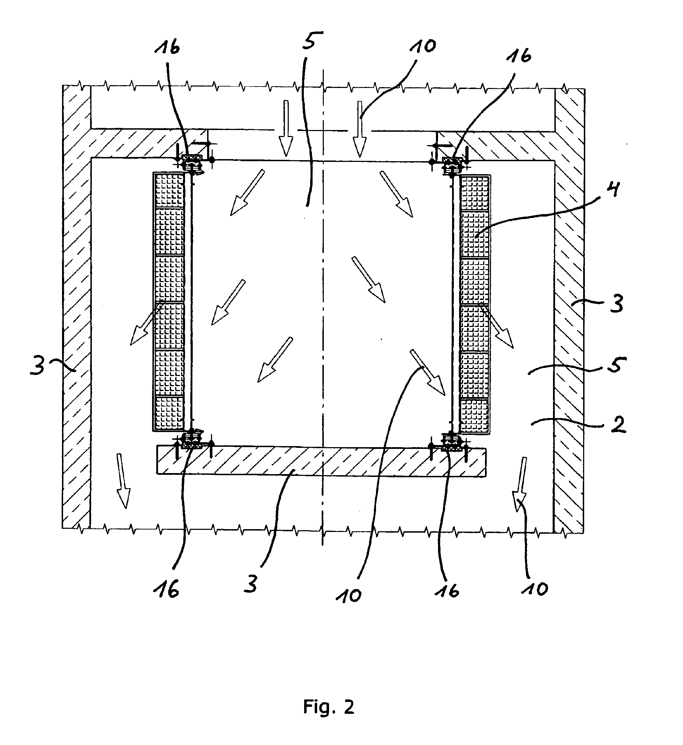

Zum Ermöglichen der Umlaufbewegung des Endlossiebbandes 6 sind die Siebfelder 4 mit einem Zugmittel oder Fördermittel untereinander verbunden, bei dem es sich in der Regel um zwei wartungsfreie, jeweils an einem Ende der Siebfelder 4 verlaufende Laschenkette 15 handelt. Die Kette 15 und die Siebfelder 4 werden in einer in dem Bauwerk 3 verankerten Führung 16 (siehe Figur 2) auf einer Bahnkurve geführt, wobei die erforderliche Abdichtung zwischen Siebfeldern 4, Ketten 15, Kettenlauf und Führungsbögen auf der Reinwasserseite vorgesehen ist, um sicherzustellen, dass das Wasser die Siebfelder 4 durchströmt und nicht umströmt. Zur Erzielung eines hohen Durchsatzes weist die Siebvorrichtung 1 zwei untere Umlenkbögen 17, 18 auf, die in einem Abstand zueinander angeordnet sind.

Zum Antreiben des Endlossiebbandes 6 in seiner Bewegungsrichtung 7 dient eine Antriebsvorrichtung 19 mit einem Antriebsmotor und mindestens einem Kettenrad 20. Der Antriebsmotor kann eine oder beide Ketten 15 antreiben. Durch eine variable Geschwindigkeit des Endlossiebbandes 6 kann eine optimale Anpassung von Wasserdurchfluss und Siebbandabreinigung erreicht werden. Zum Korrosionsschutz von Ketten 15 und Kettenführungen, insbesondere bei der Beanspruchung durch Seewasser, können Spezialanoden als Teil eines kathodischen Korrosionsschutzes eingebaut werden. Das Endlossiebband 6 wird im oberen Bereich um eine obere Umlenkung 21, die durch das Kettenrad 20 bereitgestellt wird, umgelenkt.

Die Siebfelder 4 können einen Siebeinsatz 13 aufweisen, der plan ist. In der Figur 1 sind jedoch bevorzugte Siebfelder 4 mit einem Siebeinsatz 13 dargestellt, der zur Reinwasserseite hin gewölbt ist, um eine vergrößerte Siebfläche zu schaffen. Solche gewölbten Siebeinsätze 13 können beispielsweise durch ein Dachsieb, Bogensieb, Evolventensieb, Stufensieb oder Trapezsieb gebildet werden und ermöglichen eine hohen Wasserdurchsatz bei kleiner Baugröße des Siebfeldes 4 und somit der gesamten Siebbandmaschine 1.

Die Figur 2 zeigt einen horizontalen Schnitt der Siebbandmaschine 1 von Figur 1. Das in der Strömungsrichtung 10 von innen nach außen durchströmte Endlossiebband 6 wird längs zur Fließrichtung des Wassers eingebaut, mit der offenen Seite bzw. Einlaßseite der Siebbandmaschine 1 zum anströmenden Fluss hin. Das Schmutzwasser durchströmt die Siebfelder 4 auf beiden Seiten der Siebbandmaschine 1 und verlässt sie in zwei Strömen. Bei der Siebbandmaschine 1 wird der Flüssigkeitsstrom 5 durch das Bauwerk 3 geteilt und jeweils etwa hälftig quer nach links bzw. nach rechts umgelenkt. Das Endlossiebband 6 wird so in den Flüssigkeitsstrom 5 eingetaucht, dass die Siebfelder 4 längs der ursprünglichen Fließrichtung des Flüssigkeitsstroms 5 ausgerichtet sind.

Die Siebfelder 4 sind also im Wesentlichen parallel zur Fließrichtung bzw. Anströmrichtung des Flüssigkeitsstroms 5 in dem Kanal 2 ausgerichtet und werden im Wesentlichen quer durchströmt. Eine Hälfte des geteilten Flüssigkeitsstroms 5 wird dann nach links durch den linken Abschnitt 9 des Endlossiebbandes 6 und die andere Hälfte des Flüssigkeitsstroms 5 nach rechts durch den rechten Abschnitt 8 des Endlossiebbandes 6 geleitet. Nach der Durchströmung der Siebfelder 4 des Endlossiebbandes 6 werden die beiden Hälften des Flüssigkeitsstroms 5 wieder umgelenkt und zusammengeführt.

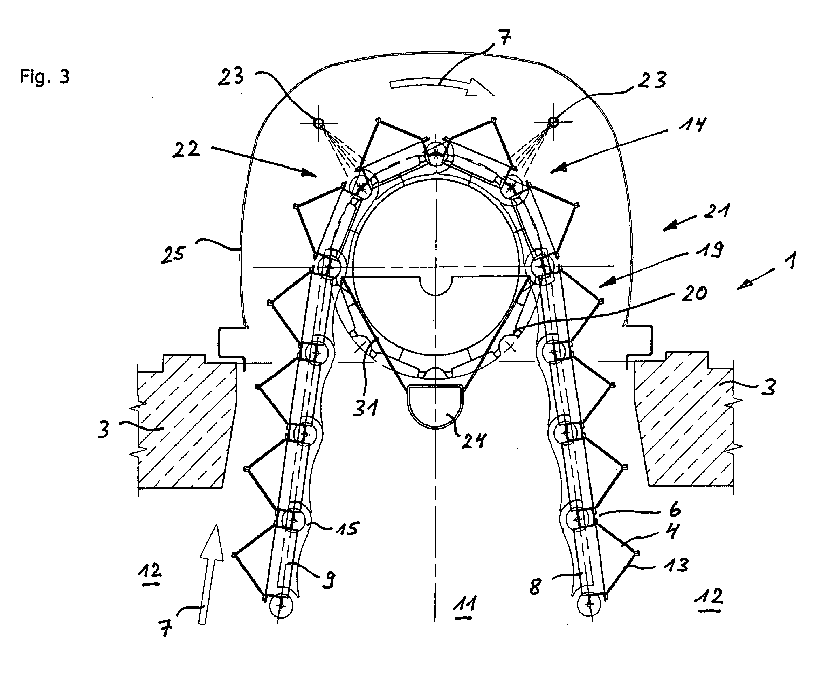

Die Figur 3 zeigt einen vertikalen Schnitt des oberen Umlenkbereichs des Endlossiebbandes 6 der Siebbandmaschine 1 von Figur 1, wo mittels einer dort angeordneten Reinigungsvorrichtung bzw. Abspritzvorrichtung zum Reinigen aus dem Flüssigkeitsstrom 5 herausgehobener Siebfelder 4 in einem Reinigungsbereich 14 und einem weiteren Reinigungsbereich 22 der Siebbandmaschine 1 mittels auf der Außenseite 12 des Endlossiebbandes 6 angeordneter Sprühdüsen 23 sowie einer auf der den Sprühdüsen 23 gegenüberliegenden Innenseite 11 des Endlossiebbandes 6 angeordneten Schmutzsammelrinne 24 zum Auffangen von dem Endlossiebband abgesprühten Schmutzes die Siebfelder 4 von anhaftendem Schmutz gereinigt werden.

Die Schmutzfracht wird an den Innenseiten der aufwärts fahrenden Siebfelder 4 haftend auf Bedienflurhöhe zum Reinigungsbereich 14, 22 transportiert. Gröbere Teile fallen direkt durch bloße Einwirkung der Schwerkraft in die Schmutzsammelrinne 24, die auch als Schmutzwassersammelrinne bezeichnet wird. Durch die Abspritzung mit den Sprühdüsen 23 erfolgt eine intensive Reinigung der Siebfelder 4 bzw. derer Siebflächen und des Siebeinsatzes 13.

Wassertiere, die sich in dem Siebfeld 4 bzw. dem Siebeinsatz 13 verfangen, werden zusammen mit dem anderen Schmutz in dem Reinigungsbereich 14, 22 abgespritzt und fallen zusammen mit den Grobbestandteilen des Schmutzes in die Schmutzsammelrinne 24. Dabei werden sie verletzt oder getötet und werden zusammen mit dem von der Siebbandmaschine 1 aus dem Flüssigkeitsstrom 5 herausgesiebten Schmutz als Abfall entsorgt.

Wenn bei der Reinigung der Siebfelder 4 hartnäckige Verschmutzungen an dem Siebfeld 4 haften bleiben, so bleiben sie im Inneren 11 des Endlossiebbandes 6, wo sie aufgrund der Umlaufbewegung des Endlossiebbandes 6 beim wiederholten Passieren der Abspritzung im Reinigungsbereich 14, 22 schließlich zuverlässig entfernt werden. Gröbere Sedimente, Rollstoffe und schwimmende Teile gelangen ebenso zwangsläufig in den Innenbereich 11 der Siebbandmaschine 1 und werden von dort entfernt. Verschmutzungen der Sohle des Kanals 2 und der bei anderen Strömungsmustern oft beobachtete Übertragungseffekt von Schmutzfracht auf die Reinwasserseite sind somit ausgeschlossen.

Der Abspritzeinrichtung mit den Sprühdüsen 23 oder der gesamte obere Kopf der Siebbandmaschine 1 sind mit einer Abdeckung 25 abgedeckt. Die Abspritzung der Siebfelder 4 ist von außen steuerbar. Es kann eine manuelle oder automatische Spritzdüsen-Reinigungsvorrichtung vorgesehen sein.

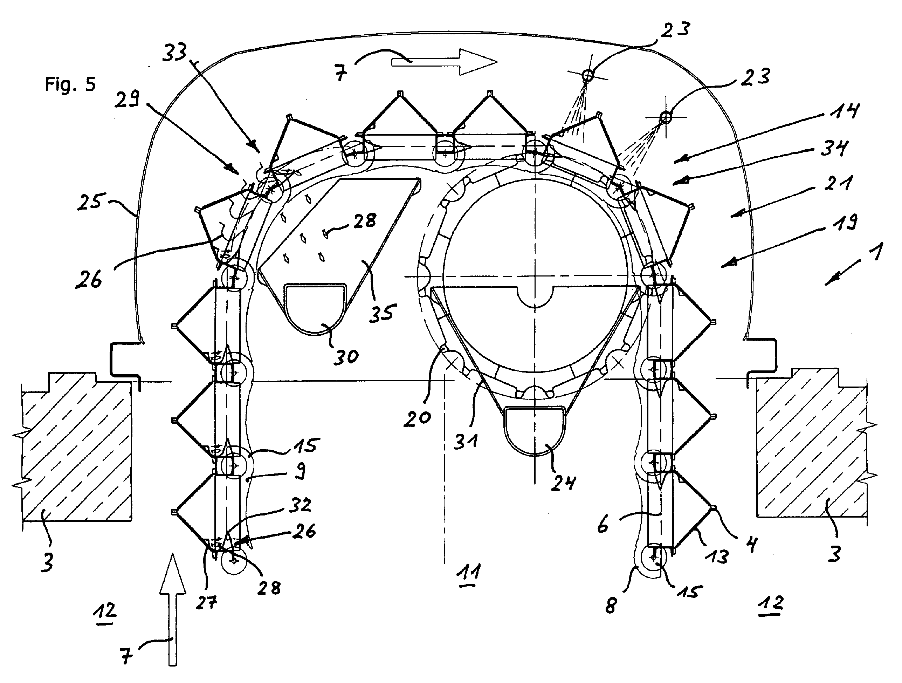

Anhand der Figur 5 wird veranschaulicht, in welchen Merkmalen sich eine erfindungsgemäße Siebbandmaschine 1 von einer Siebbandmaschine 1 nach dem Stand der Technik unterscheiden kann. Dies bedeutet, dass die im Zusammenhang mit den Figuren 1 bis 3 erläuterten Merkmale auch für eine erfindungsgemäße Siebbandmaschine 1 zutreffen können, soweit sie nicht erfindungsgemäß abgewandelt werden.

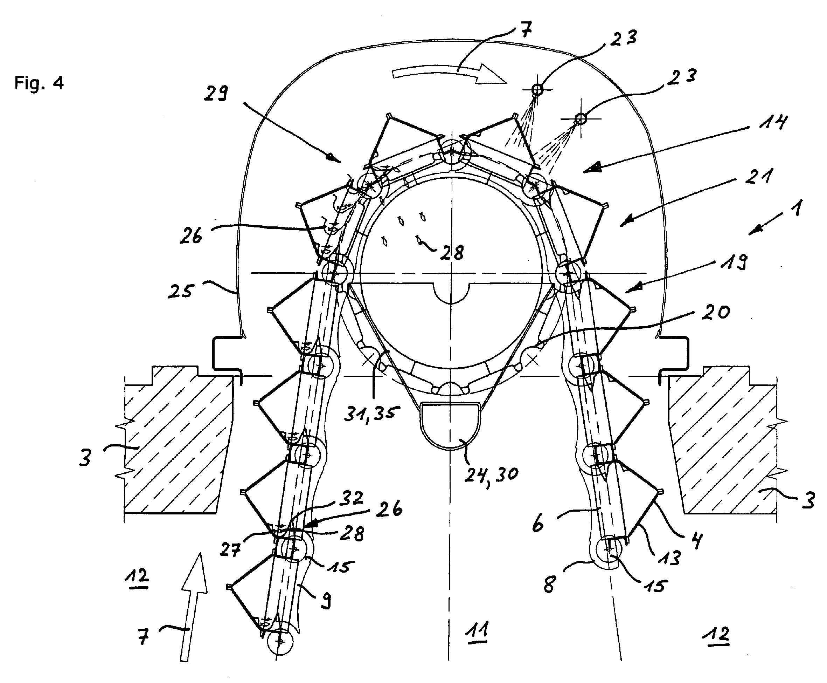

Die Figur 4 zeigt einen vertikalen Schnitt des oberen Umlenkbereichs einer Siebbandmaschine 1 mit Siebfeldern 4, die auf ihrer Anströmseite, d.h. der Schmutzwasserseite, eine Fischheberinne 26 aufweisen. Die Fischheberinnen 26 sind dabei derart angeordnet und ausgebildet, dass sie sich bei den aufwärts bewegenden Siebfeldern 4, d.h. im sich aufwärts bewegenden Abschnitt 8 des Endlossiebbandes 6, am unteren Ende des Siebfeldes 4 befinden, sie bei den sich aufwärts bewegenden Siebfeldern 4 eine mit Flüssigkeit gefüllte Auffangvertiefung 27 für in dem jeweiligen Siebfeld 4 befindliche Wassertiere 28 bilden, die bei der Bewegung des Endlossiebbandes 6 mit dem Siebfeld 4, der in der Auffangvertiefung enthaltenen Flüssigkeit und darin aufgefangener Wassertiere 28 in der Bewegungsrichtung 7 des Endlossiebbandes 6 aus dem Flüssigkeitsstrom 5 herausgehoben wird, und im oberen Umlenkbereich des Endlossiebbandes 6 in einem Entleerungsbereich 29 der Siebbandmaschine 1 durch eine Verkippung des Siebfeldes 4 und der Auffangvertiefung 27 in eine Auffangsammelrinne 30 ausgeleert werden.

Dabei ist der Reinigungsbereich 14 in der Bewegungsrichtung 7 des Endlossiebbandes 6 so weit hinter dem Entleerungsbereich 29 angeordnet, dass die Auffangvertiefungen 27 entleert werden, bevor sie den Reinigungsbereich 14 erreichen. Die Wassertiere 28 fallen also nicht zusammen mit dem Grobschmutz von den Siebfeldern 4 ab oder werden zusammen mit dem anhaftenden Schmutz abgesprüht, sondern werden bereits zuvor aus den Auffangvertiefungen 27 entnommen. Bis zu diesem Zeitpunkt verbleiben die Wassertiere 28 in dem Wasser in den Auffangvertiefungen 27. Dadurch wird die Möglichkeit geschaffen, die Wassertiere 28 von dem anderen Schmutz schonend abzutrennen und in das Gerinne zurückzuführen. Bei der in Figur 4 dargestellten Ausführungsform, in der die Auffangsammelrinne 30 die Schmutzsammelrinne 24 ist, wäre hierzu eine nicht dargestellte Trennhilfe, beispielsweise eine Trennwand erforderlich, die verhindert, dass die Wassertiere 28 in den Auffangtrichter 31 der Schmutzsammelrinne 24 fallen, sondern stattdessen in eine separat zu der Schmutzsammelrinne 24 angeordnete Auffangsammelrinne 30.

Es wird also eine Siebbandmaschine 1 mit einer schonenden Fischrückführung vorgeschlagen. Hierzu weisen die Siebfelder 4 jeweils eine Fischheberinne 26 auf, in der die Fische 28 in einer mit Flüssigkeit gefüllten Auffangvertiefung 27 schonend aus dem Flüssigkeitsstrom herausgehoben und anschließend im oberen Umlenkbereich 21 des Endlossiebbandes 6 in einem Entleerungsbereich 29 der Siebbandmaschine 1 durch eine Verkippung des Siebfeldes 4 und der Auffangvertiefung 27 in eine Auffangsammelrinne 30 ausgeleert werden, bevor das Siebfeld 4 den Reinigungsbereich 14 mit den Sprühdüsen 23 erreicht, in dem der von dem Siebfeld 4 aus dem Gerinne ausgetragene Schmutz in die Schmutzsammelrinne 24 abgereinigt wird. Durch diese Ausführungsform wird also ein schonendes Herausfördern der Wassertiere 28 ermöglicht.

Bei einer erfindungsgemäßen Siebbandmaschine 1 werden die Wassertiere 28 sowohl schonender als auch effektiver aus dem Gerinne herausgefördert und in dieses zurückgeführt als dies von einer gattungsfremden querdurchströmten Siebbandmaschine gemäß der US 6,187,184 B1 bekannt ist. Dies liegt an der besonderen erfindungsgemäßen Ausgestaltung des Ausleerens der Flüssigkeit in den gefüllten Auffangvertiefungen 27 mit den darin aufgefangenen Wassertieren 28. Bei der US 6,187,184 B1 werden die Wassertiere in einem Entleerungsbereich auf ein Sieb ausgeleert, das die Wassertiere von dem Wasser trennt. Das Wasser fällt durch das Sieb in das Gerinne zurück, wogegen die Wassertiere entlang des Siebes rutschen und erst dann in eine Auffangrinne gelangen.

Im Gegensatz dazu werden erfindungsgemäß die mit Flüssigkeit gefüllten Auffangvertiefungen 27 zusammen mit den darin befindlichen Wassertieren 28 in eine Auffangsammelrinne 30 ausgeleert.

Bei der Siebbandmaschine gemäß der US 6,187,184 B1 werden die Wassertiere also auf ein Sieb ausgeleert, bei der Erfindung dagegen in eine Auffangsammelrinne. Ferner wird bei der Siebbandmaschine gemäß der US 6,187,184 B1 das Wasser einer Auffangvertiefung in das Gerinne ausgeleert, bei der Erfindung dagegen in die Auffangsammelrinne. Bei der Siebbandmaschine gemäß der US 6,187,184 B1 werden somit die Wassertiere von dem sie umgebenden Wasser einer Auffangvertiefung getrennt, bei der Erfindung werden die Wassertiere zusammen mit dem sie umgebenden Wasser einer Auffangvertiefung ausgeleert und mit diesem in der Auffangsammelrinne aufgefangen.

Ein weiterer Unterschied betrifft das Besprühen der Wassertiere. Bei der US 6,187,184 B1 ist es unverzichtbar, die mittels des Siebes von dem Wasser der Fischheberinne abgetrennten Wassertiere mit Niederdruck-Sprüheinrichtungen zu besprühen, nämlich einerseits um ihnen wenigstens eine feuchte Umgebung zur Verfügung zu stellen, damit sie nicht austrocknen, und andererseits, um sie entlang des schrägstehenden Siebes in die Auffangsammelrinne zu fördern. Es liegt auf der Hand, dass dies aufgrund folgender Belastungen keine sehr schonende Behandlung der Wassertiere darstellt: (i) Die Wassertiere fallen aus einer gewissen Fallhöhe auf eine harte Fläche, nämlich das Sieb. (ii) Die Auftreffgeschwindigkeit der Wassertiere auf dem Sieb wird durch die Sprüheinrichtung erhöht. (iii) Die Wassertiere werden dem Sprühstrahl einer von außen einwirkenden Sprüheinrichtung ausgesetzt. (iv) Die Wassertiere werden dem Sprühstrahl einer von innen einwirkenden Sprüheinrichtung ausgesetzt. (v) Die Wassertiere müssen über das schrägstehende Sieb rutschen. (vi) Die Wassertiere befinden sich nicht permanent in Wasser, sondern während des Rutschens über das Sieb und die anschließende Rampe nur in einer mittels Sprüheinrichtungen feucht gehaltenen Umgebung.

Alle diese Nachteile vermeidet die Erfindung dadurch, dass die Wassertiere 28 und das Wasser der Fischheberinne, d.h. der Auffangvertiefungen 27 zusammen in eine Auffangsammelrinne 30 ausgeleert werden.

Darüber hinaus stellen zusätzliche Niederdruck-Sprüheinrichtungen zum Befeuchten und Transportieren der Wassertiere wie sie die Siebbandmaschine gemäß der US 6,187,184 B1 benötigt auch einen erhöhten technischen Aufwand dar, der bei der Erfindung nicht erforderlich ist, da die Auffangvertiefungen 27 bevorzugt derart ausgebildet sein können, dass sie nur durch die Schwerkraft entleert werden, ohne dass dabei die Siebfelder 4 mittels der Reinigungsvorrichtung gereinigt werden. Ferner bewirken die bei der US 6,187,184 B1 erforderlichen Niederdruck-Sprüheinrichtungen auch, dass bereits im Entleerungsbereich Schmutz von den Siebfeldern abgetrennt wird und auf das Fischsieb fällt. Damit sind folgende Nachteile verbunden: Die auf dem Sieb liegenden Wassertiere können durch die herabfallende Schmutzfracht verletzt werden, das Sieb kann sich durch den Schmutz zusetzen und es kann Schmutz in die Auffangrinne gelangen. Diese Nachteile sind bei der Erfindung nicht gegeben.

Eine erfindungsgemäße Siebbandmaschine 1 weist somit in bevorzugten Ausgestaltungen folgende Merkmale auf. Im Entleerungsbereich 29 wird das Wasser aus den Auffangvertiefungen 27 vorteilhafterweise zusammen mit den darin befindlichen Wassertieren 28 in eine Auffangsammelrinne 30 ausgeleert, vorzugsweise direkt in die Auffangsammelrinne 30. Beim Ausleeren der Auffangvertiefungen 27 mit den Wassertieren 28 in die Auffangsammelrinne 30 ist es nicht erforderlich, die Wassertiere 28 mit einer Sprüheinrichtung mit Wasser zu besprühen, um ihnen eine feuchte Umgebung zur Verfügung zu stellen, damit sie nicht austrocknen oder um sie entlang einer Förderweges zu der Auffangsammelrinne 30 zu transportieren, da die Wassertiere 28 in dem Wasser der Auffangvertiefungen 27 verbleiben können und zusammen mit dem aus den Auffangvertiefungen 27 entleerten Wasser, d.h. dem Wasser aus der jeweiligen Auffangvertiefung 27 in die Auffangsammelrinne 30 entleert werden können, vorzugsweise direkt in die Auffangsammelrinne 30. Die Wassertiere 28 befinden sich also permanent in Wasser, angefangen von dem Gerinne über die Auffangvertiefungen 27 und die Auffangsammelrinne 30 zurück in das Gerinne, ausgenommen den kurzen, unschädlichen Moment, in dem sie zusammen mit dem sie umgebenden Wasser aus einer Auffangvertiefung 27 in die Auffangsammelrinne 30 fallen. Daher ist keine Sprüheinrichtung zum Befeuchten oder Abspülen der Wassertiere 28 erforderlich.

Eine erfindungsgemäße Siebbandmaschine 1 weist ferner in bevorzugten Ausgestaltungen folgende Merkmale auf. Vorteilhafterweise werden im Entleerungsbereich 29 sowohl die Wassertiere 28 aus der Fischheberinne 26 bzw. aus einer Auffangvertiefung 27 als auch das Wasser aus der Fischheberinne 26 bzw. aus einer Auffangvertiefung 27 in die Auffangsammelrinne 30 entleert, vorzugsweise direkt in die Auffangsammelrinne 30. Die Wassertiere 28 aus der Fischheberinne 26 bzw. aus einer Auffangvertiefung 27 werden also vorteilhafterweise nicht von dem sie umgebenden Wasser aus der Fischheberinne 26 bzw. aus der jeweiligen Auffangvertiefung 27 getrennt, sondern die Wassertiere 28 werden bevorzugt zusammen mit dem Wasser der Fischheberinne 26 bzw. der jeweiligen Auffangvertiefung 27 aus der jeweiligen Auffangvertiefung 27 entleert und die Wassertiere 28 werden zusammen mit dem Wasser der jeweiligen Auffangvertiefung 27 von der Auffangsammelrinne 30 aufgefangen.

Darüber hinaus hat das Ausleeren der Wassertiere 28 zusammen mit dem sie umgebenden Wasser aus einer Auffangvertiefung 27 in die Auffangsammelrinne 30 gegenüber dem Ausleeren der Wassertiere 28 mit dem sie umgebenden Wasser aus einer Auffangvertiefung 27 auf eine harte Fläche, beispielsweise ein Trennsieb, auch den Vorteil, dass die Wassertiere 28 bei dem mit dem Ausleeren verbundenen Fallen einer geringeren Verletzungsgefahr ausgesetzt sind, insbesondere wenn die Auffangsammelrinne 30 gemäß einer bevorzugten weiteren Ausgestaltung derart ausgebildet ist, dass sie permanent zumindest teilweise mit Flüssigkeit gefüllt ist.

Durch zusätzliche Maßnahmen, beispielsweise durch eine oben genannte Trennhilfe oder durch eine bevorzugte Ausgestaltung, wie sie unten im

Zusammenhang mit Figur 5 erläutert wird, wird die Möglichkeit geschaffen, dass der in die Schmutzsammelrinne 24 herausgeförderte Schmutz entsorgt werden kann, ohne dass sich darin in nennenswertem Umfang Wassertiere 28 befinden, wobei die Fische werden schonend behandelt, in die Auffangsammelrinne 30 abgetrennt und rückgeführt werden können, ohne dass sich in der Auffangssammelrinne 30 in nennenswertem Umfang Schmutz befindet.

Die Siebbandmaschine 1 bzw. die Auffangvertiefungen 27 sind dementsprechend bevorzugt derart ausgebildet, dass sie nur durch die Schwerkraft entleert werden, ohne dass dabei die Siebfelder 4 mittels der Abspritzvorrichtung gereinigt werden. Das Entleeren der Wassertiere 28 aus den Auffangvertiefungen 27 bzw. deren Abtrennen aus dem in den Siebfeldern 4 enthaltenen Schmutz wird dabei in der Regel durch die Eigenbewegung der lebenden Wassertiere 28 unterstützt. Im Gegensatz zu den Wassertieren 28 bleibt im Entleerungsbereich 29 der Großteil des Schmutzes in dem Siebfeld 4 haften und wird erst in dem Reinigungsbereich 14 abgetrennt. Natürlich kann in besonderen Ausführungsformen auch eine Einrichtung zur Unterstützung einer schonenden mechanischen Entleerung oder Entnahme der Wassertiere 28 aus den Fischheberinnen 26 und/oder ein Grobsieb zum Verhindern, dass im Entleerungsbereich 29 Grobschmutz aus einem Siebfeld 4 in die Auffangsammelrinne 30 fällt, vorgesehen sein.

Je mehr Siebfelder 4 des Endlossiebbandes 6 der Siebbandmaschine 1 eine Fischheberinne 26 aufweisen, desto höher ist der Grad der Fischrückführung. Bevorzugt weisen alle Siebfelder 4 eine Fischheberinne 26 auf. Entsprechendes gilt für die Länge der Fischheberinnen 26; bevorzugt erstrecken sie sich über die gesamte oder nahezu gesamte Breite der Siebfelder 4.

Nach einem zusätzlichen vorteilhaften Merkmal ist vorgesehen, dass die Fischheberinnen 26 auf der Anströmseite jeweils eine Dammwand 32 aufweisen, die so hoch ist, dass sie in dem sich aufwärts bewegenden Abschnitt 9 des Endlossiebbandes 6 den Flüssigkeitsspiegel in der Auffangvertiefung 27 überragt, wenn die Auffangvertiefung 27 aus dem Flüssigkeitsstrom 5 herausgehoben ist, und sich in dem aufwärts bewegenden Abschnitt 9 des Endlossiebbandes 6 auf der stromabwärts gelegenen Seite der Dammwand 32 eine strömungsarme, strömungsfreie, wirbelarme oder wirbelfreie Zone in der Fischheberinne 26 bildet, wenn die Auffangvertiefung 27 in den Flüssigkeitsstrom 5 eingetaucht ist.

Die Figur 5 zeigt in einer Abwandlung von Figur 4 einen vertikalen Schnitt des oberen Umlenkbereichs einer erfindungsgemäßen Siebbandmaschine 1, bei der die Auffangsammelrinne 30 separat zu der Schmutzsammelrinne 24 ausgebildet ist. Dabei ist die Auffangsammelrinne 30 in der Bewegungsrichtung 7 des Endlossiebbandes 6 vor der Schmutzsammelrinne 24 angeordnet, damit die Auffangvertiefungen 27 der Fischheberinnen 26 mit darin enthaltenen Wassertieren 28 in die Auffangsammelrinne 30 entleert werden, bevor das jeweilige Siebfeld 4 den Reinigungsbereich 14 erreicht. Dadurch werden die Wassertiere 28 in schonender Weise von dem Schmutz ferngehalten.

In Figur 5 ist ferner die Auffangsammelrinne 30 höher als die Schmutzsammelrinne 24 angeordnet. Dies hat den zusätzlichen Vorteil, dass die Fallhöhe der Wassertiere 28 beim Entleeren der Auffangvertiefungen 27 reduziert ist, was die schonende Behandlung bis zum Abschluss der Rückführung in das Gerinne weiter verbessert. Während bei Ausführungsformen gemäß der Figur 4 die Fallhöhe der Wassertiere 28 beim Entleeren der Auffangvertiefungen 27 aufgrund der technischen Randbedingungen in Bezug auf die Ketten 15 und deren Umlenkung auf ein nicht unterschreitbares Mindestmaß beschränkt ist, kann bei der Ausführungsform gemäß Figur 5 die Fallhöhe verringert werden. Ferner hat diese Ausführungsform den Vorteil einer geringeren Schmutzrückführung mit den Wassertieren 28.

Die geringe Fallhöhe der Wassertiere 28 im Entleerungsbereich 29 kann auch dadurch realisiert werden und/oder zur Folge haben, dass der Abstand der Auffangsammelrinne 30 zu dem Entleerungsbereich 29 des Endlossiebbandes 6 kleiner als der Abstand der Schmutzsammelrinne 24 zu dem Reinigungsbereich 14 des Endlossiebbandes 6 ist. Dabei kann vorteilhafterweise vorgesehen sein, dass der Abstand der Auffangsammelrinne 30 zu dem Entleerungsbereich 29 des Endlossiebbandes 6 weniger als 80%, bevorzugt weniger als 60% des Abstandes der Schmutzsammelrinne 24 zu dem Reinigungsbereich 14 des Endlossiebbandes 6 beträgt.

In weiterer Ausgestaltung ist wie in Figur 5 dargestellt vorgesehen, dass die obere Umlenkung 21 des Endlossiebbandes 6 zwei in einem Abstand zueinander angeordnete Umlenkbogen, nämlich einen ersten oberen Umlenkbogen 33 im Entleerungsbereich 29 und einen zweiten, durch das Kettenrad 20 gebildeten oberen Umlenkbogen 34 im Reinigungsbereich 14 aufweist. Dazwischen kann, wie in Figur 5 dargestellt ist, ein gerader Abschnitt der Führung 16 oder Abschnitt mit einem größeren Krümmungsradius liegen. Der Krümmungsradius der Bahnkurve des Endlossiebbandes 6 in dem Entleerungsbereich 29 und in dem Reinigungsbereich 14 kann kleiner sein als in dem dazwischen liegenden Bereich. Beispielsweise kann der Krümmungsradius der Bahnkurve des Endlossiebbandes 6 in dem Entleerungsbereich 29 und in dem Reinigungsbereich 14 weniger als 80%, bevorzugt weniger als 60% des Krümmungsradius des dazwischen liegenden Bereichs betragen.

Nach einem anderen vorteilhaften Merkmal ist vorgesehen, dass die Bahnkurve des Endlossiebbandes 6 in dem Entleerungsbereich 29 und in dem Reinigungsbereich 14 in etwa in derselben Höhe verläuft. Hierdurch ergibt sich eine kompakte Anordnung der Siebbandmaschine 1.

Sowohl bei einer Ausführungsform gemäß Figur 4 als auch gemäß Figur 5 kann es vorteilhaft sein, wenn die Auffangsammelrinne 30 einen Auffangtrichter 35 aufweist, damit die Wassertiere 28 gut aufgefangen werden. Ferner ist es vorteilhaft, wenn die Auffangsammelrinne 30 derart ausgebildet ist, dass sie permanent zumindest teilweise mit Flüssigkeit gefüllt ist, um damit einerseits der Fall der Wassertiere 28 zu dämpfen und sie nicht hart in der Auffangsammelrinne 30 aufschlagen und andererseits dafür zu sorgen, dass sie nur so kurz wie möglich außerhalb des Wassers sind. Der permanente Wasserstand in der Auffangsammelrinne 30 kann durch einen entsprechenden Zulauf, die Gestaltung des Ablaufs oder ein Bepumpen erreicht werden. Weiterhin besteht ein vorteilhaftes Merkmal darin, dass die Antriebsvorrichtung zum Antreiben des Endlossiebbandes 6 im Reinigungsbereich 14 oder im Bereich der Schmutzsammelrinne 24 ausgebildet ist, da dort aufgrund des für die Ketttenumlenkung erforderlichen Platzbedarfs mehr Raum als im Entleerungsbereich 29 zur Verfügung steht.

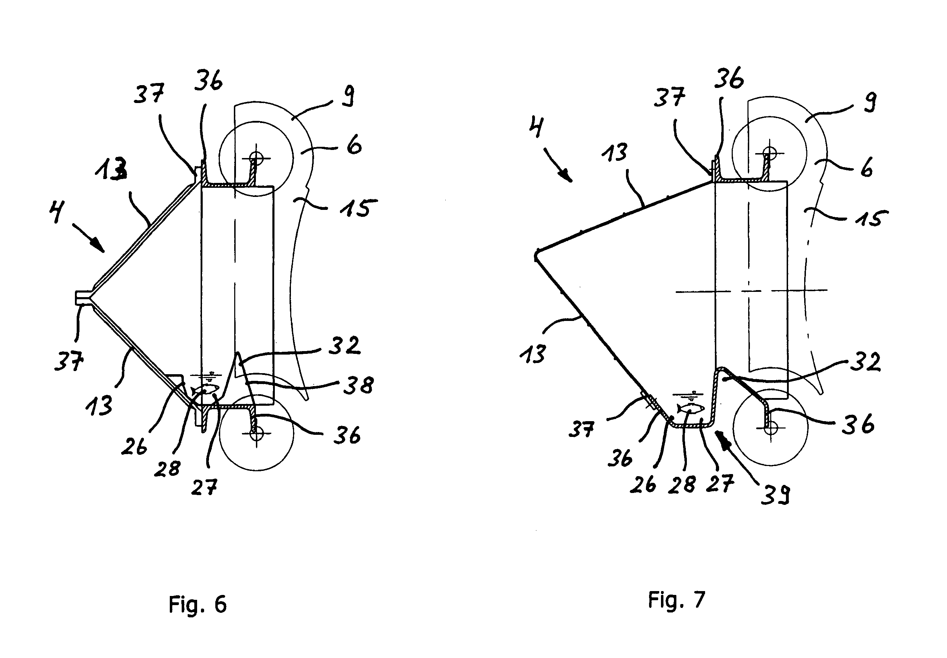

Die Figur 6 zeigt in einer Detailansicht zu den Figuren 4 und 5 ein dort verwendetes Siebfeld 4 aus dem aufwärts bewegten Abschnitt 9 des Endlossiebbandes 6 mit Fischheberinne 26, Auffangvertiefung 27, Dammwand 32 und einem in dem Wasser in der Auffangvertiefung 27 aufgefangenen und nach oben geförderten Wassertier 28. Das Siebfeld 4 umfasst einen Siebfeldrahmen 36, der an der Kette 15 befestigt ist. Der Siebfeldrahmen 36 trägt einen Siebeinsatzrahmen 37, an dem ein oder mehrere Siebeinsätze 13 befestigt sind. Die Siebeinsätze 13 bilden ein Dachsieb. Die Fischheberinne 26, die Auffangvertiefung 27 und die Dammwand 32 werden in Figur 6 durch einen Profileinsatz 38 gebildet, der als zusätzliches Bauteil in den Siebfeldrahmen 36 bzw. das Siebfeld 4 montiert wird.

Die Figur 7 zeigt in einer Abwandlung zu Figur 6 ein Siebfeld 4 aus dem aufwärts bewegten Abschnitt 9 des Endlossiebbandes 6 mit Fischheberinne 26, Auffangvertiefung 27, Dammwand 32 und einem in dem Wasser in der Auffangvertiefung 27 aufgefangenen und nach oben geförderten Wassertier 28. Das Siebfeld 4 umfasst einen Siebfeldrahmen 36, der an der Kette 15 befestigt ist. Der Siebfeldrahmen 36 trägt einen Siebeinsatzrahmen 37, an dem ein oder mehrere Siebeinsätze 13 befestigt sind. Die Siebeinsätze 13 bilden ein Stufensieb. In Abwandlung von Figur 6 werden die Fischheberinne 26, die Auffangvertiefung 27 und die Dammwand 32 jedoch nicht durch einen Profileinsatz 38 gebildet, der als zusätzliches Bauteil in den Siebfeldrahmen 36 bzw. das Siebfeld 4 montiert wird, sondern werden durch eine entsprechende Profilierung 39 des Siebfeldrahmens 36 gebildet und sind somit in den Siebfeldrahmen 36 integriert. Hierdurch wird das Bauteil eines Profileinsatz 38 gemäß Figur 6 und der Aufwand für dessen Montage eingespart. Ferner kann sich, je nach Gestaltung der Siebeinsätze 13, auch eine größere effektive Siebfläche ergeben.

### Bezugszeichenliste

- 1: Siebbandmaschine
- 2: Kanal
- 3: Bauwerk
- 4: Siebfeld
- 5: Flüssigkeitsstrom
- 6: Endlossiebband
- 7: Bewegungsrichtung zu 6
- 8: abwärts bewegter Abschnitt von 6
- 9: aufwärts bewegter Abschnitt von 6
- 10: Strömungsrichtung
- 11: Innenseite
- 12: Außenseite
- 13: Siebeinsatz
- 14: Reinigungsbereich
- 15: Kette
- 16: Führung
- 17: erster unterer Umlenkbogen
- 18: zweiter unterer Umlenkbogen
- 19: Antriebsvorrichtung
- 20: Kettenrad
- 21: obere Umlenkung
- 22: weiterer Reinigungsbereich
- 23: Sprühdüse
- 24: Schmutzsammelrinne
- 25: Abdeckung
- 26: Fischheberinne
- 27: Auffangvertiefung
- 28: Wassertier
- 29: Entleerungsbereich
- 30: Auffangsammelrinne
- 31: Auffangtrichter zu 24
- 32: Dammwand
- 33: erster oberer Umlenkbogen
- 34: zweiter oberer Umlenkbogen
- 35: Auffangtrichter zu 30
- 36: Siebfeldrahmen
- 37: Siebeinsatzrahmen
- 38: Profileinsatz
- 39: Profilierung

## Patentansprüche

1. Siebbandmaschine (1) zum mechanischen Abscheiden und Herausfördern von festen Bestandteilen, Festkörpern oder Feststoffen aus einem in einem Gerinne fließenden Flüssigkeitsstrom (5), insbesondere Sieb- oder Filterrechen für Prozess-, Kühl- oder Abwasserströmungen oder für Klär- oder Wasserkraftanlagen oder für den Einsatz in einem wasserführenden Kanal (2) eines Kühlwasser-Einlaufbauwerkes (3) eines Kraftwerks, mit
einer Mehrzahl von Siebfeldern (4), die ein umlaufendes, in den Flüssigkeitsstrom (5) eintauchendes Endlossiebband (6) bilden, in dem mehrere in Bewegungsrichtung (7) des Endlossiebbandes (6) aufeinanderfolgende, nebeneinander angeordnete Siebfelder (4) sowohl in dem sich abwärts bewegenden Abschnitt (8) des Endlossiebbandes (6) als auch dem sich aufwärts bewegenden Abschnitt (9) des Endlossiebbandes (6) jeweils eine gemeinsame Siebfläche in dem Gerinne bilden,
wobei die Strömungsrichtung (10) sowohl für den sich abwärts bewegenden Abschnitt (8) des Endlossiebbandes (6) als auch den sich aufwärts bewegenden Abschnitt (9) des Endlossiebbandes (9) von der Innenseite (11) des Endlossiebbandes (6) durch die Siebfelder (4) zu der Außenseite (12) des Endlossiebbandes (6) gerichtet ist,
einer Antriebsvorrichtung zum Antreiben des Endlossiebbandes (6) in seiner Bewegungsrichtung (7) und
einer im oberen Umlenkbereich (21) des Endlossiebbandes (6) angeordneten Reinigungsvorrichtung zum Reinigen aus dem Flüssigkeitsstrom (5) herausgehobener Siebfelder (4) in einem Reinigungsbereich (14) der Siebbandmaschine (1) mittels auf der Außenseite (12) des Endlossiebbandes (6) angeordneter Sprühdüsen (23) oder Druckluftdüsen sowie einer auf der den Sprühdüsen (23) oder Druckluftdüsen gegenüberliegenden Innenseite des Endlossiebbandes (6) angeordneten Schmutzsammelrinne (24) zum Auffangen von dem Endlossiebband (6) abgesprühten Schmutzes,
wobei die Siebbandmaschine (1) Siebfelder (4) umfasst, die auf ihrer Anströmseite jeweils eine Fischheberinne (26) aufweisen, die derart angeordnet und ausgebildet sind, dass
- sie sich bei den aufwärts bewegenden Siebfeldern (4) am unteren Ende befinden,
- sie bei den sich aufwärts bewegenden Siebfeldern (4) jeweils eine mit Flüssigkeit gefüllte Auffangvertiefung (27) für in dem jeweiligen Siebfeld (4) befindliche Wassertiere (28) bilden, die bei der Bewegung des Endlossiebbandes (6) mit dem Siebfeld (6), der in der Auffangvertiefung (27) enthaltenen Flüssigkeit und darin aufgefangener Wassertiere (28) in der Bewegungsrichtung (7) des Endlossiebbandes (7) aus dem Flüssigkeitsstrom (3) herausgehoben wird, und
- im oberen Umlenkbereich (21) des Endlossiebbandes (6) in einem Entleerungsbereich (29) der Siebbandmaschine (1) durch eine Verkippung des Siebfeldes (4) und der Auffangvertiefung (27) in eine Auffangsammelrinne (30) ausgeleert werden,
wobei der Reinigungsbereich (14) in der Bewegungsrichtung (7) des Endlossiebbandes (6) so weit hinter dem Entleerungsbereich (29) angeordnet ist, dass die Auffangvertiefungen (27) entleert werden, bevor sie den Reinigungsbereich (14) erreichen,
**dadurch gekennzeichnet, dass**
die Auffangsammelrinne (30) separat zu der Schmutzsammelrinne (24) ausgebildet ist,
die Auffangsammelrinne (30) in der Bewegungsrichtung (7) des Endlossiebbandes (6) vor der Schmutzsammelrinne (24) angeordnet ist, so dass die Auffangvertiefungen (27) der Fischheberinnen (26) mit darin enthaltenen Wassertieren (28) in die Auffangsammelrinne (30) entleert werden, bevor das jeweilige Siebfeld (4) den Reinigungsbereich (14) erreicht,
die obere Umlenkung (21) des Endlossiebbandes (6) zwei in einem Abstand zueinander angeordnete Umlenkbogen, nämlich einen ersten oberen Umlenkbogen (33) im Entleerungsbereich (29) und einen zweiten oberen Umlenkbogen (34) im Reinigungsbereich (14) aufweist,
die Auffangsammelrinne (30) höher als die Schmutzsammelrinne (24) angeordnet ist und
die Antriebsvorrichtung (19) ein im Bereich der oberen Umlenkung (21) angeordnetes Kettenrad (20) umfasst und die Auffangsammelrinne (30) derart separat zu der Schmutzsammelrinne (24) ausgebildet ist, dass die Auffangsammelrinne (30) seitlich neben dem Kettenrad (20) vorbei verläuft.

2. Siebbandmaschine (1) nach Anspruch 1, **dadurch gekennzeichnet, dass** der Abstand der Auffangsammelrinne (30) zu dem Entleerungsbereich (29) des Endlossiebbandes (6) kleiner als der Abstand der Schmutzsammelrinne (24) zu dem Reinigungsbereich (14) des Endlossiebbandes (6) ist.

3. Siebbandmaschine (1) nach dem vorhergehenden Anspruch, **dadurch gekennzeichnet, dass** der Abstand der Auffangsammelrinne (30) zu dem Entleerungsbereich (29) des Endlossiebbandes (6) weniger als 80 %, bevorzugt weniger als 60 % des Abstandes der Schmutzsammelrinne (24) zu dem Reinigungsbereich (14) des Endlossiebbandes (6) beträgt.

4. Siebbandmaschine (1) nach einem der vorhergehenden Ansprüche, **dadurch gekennzeichnet, dass** die Bahnkurve des Endlossiebbandes (6) in dem Entleerungsbereich (29) und in dem Reinigungsbereich (2) in etwa in derselben Höhe verläuft.

5. Siebbandmaschine (1) nach einem der vorhergehenden Ansprüche, **dadurch gekennzeichnet, dass** der Krümmungsradius der Bahnkurve des Endlossiebbandes (6) in dem Entleerungsbereich (29) und in dem Reinigungsbereich (14) kleiner ist als in dem dazwischen liegenden Bereich.

6. Siebbandmaschine (1) nach einem der vorhergehenden Ansprüche, **dadurch gekennzeichnet, dass** die Auffangvertiefungen (27) derart ausgebildet sind, dass sie nur durch eine Verkippung des Siebfeldes (4) und der Auffangvertiefung (27) und die dabei auf das in der Auffangvertiefung (27) enthaltene Wasser einwirkende Schwerkraft in eine Auffangsammelrinne (30) entleert werden, ohne dass dabei die Siebfelder (4) mittels der Reinigungsvorrichtung gereinigt werden.

7. Siebbandmaschine (1) nach einem der vorhergehenden Ansprüche, **dadurch gekennzeichnet, dass** die Auffangvertiefungen (27) derart ausgebildet sind, dass im Entleerungsbereich (29) das Wasser aus den Auffangvertiefungen (27) zusammen mit den darin befindlichen Wassertieren (28) in eine Auffangsammelrinne (30) ausgeleert wird, vorzugsweise direkt in die Auffangsammelrinne (30).

8. Siebbandmaschine (1) nach einem der vorhergehenden Ansprüche, **dadurch gekennzeichnet, dass** die Auffangvertiefungen (27) derart ausgebildet sind, dass im Entleerungsbereich (29) die Wassertiere (28) beim Ausleeren der Auffangvertiefungen (27) in dem Wasser der Auffangvertiefungen (27) verbleiben und zusammen mit dem aus den Auffangvertiefungen (27) entleerten Wasser in die Auffangsammelrinne (30) entleert werden, vorzugsweise direkt in die Auffangsammelrinne (30).

9. Siebbandmaschine (1) nach einem der vorhergehenden Ansprüche, **dadurch gekennzeichnet, dass** die Auffangvertiefungen (27) derart ausgebildet sind, dass im Entleerungsbereich (29) sowohl die Wassertiere (28) aus einer Auffangvertiefung (27) als auch das Wasser aus einer Auffangvertiefung (27) in die Auffangsammelrinne (30) entleert werden, vorzugsweise direkt in die Auffangsammelrinne (30).

10. Siebbandmaschine (1) nach einem der vorhergehenden Ansprüche, **dadurch gekennzeichnet, dass** die Auffangvertiefungen (27) derart ausgebildet sind, dass im Entleerungsbereich (29) die Wassertiere (28) aus einer Auffangvertiefung (27) nicht von dem sie umgebenden Wasser aus einer Auffangvertiefung (27) getrennt werden.

11. Siebbandmaschine (1) nach einem der vorhergehenden Ansprüche, **dadurch gekennzeichnet, dass** die Auffangvertiefungen (27) derart ausgebildet sind, dass im Entleerungsbereich (29) die Wassertiere (28) zusammen mit dem Wasser der jeweiligen Auffangvertiefung (27) aus der jeweiligen Auffangvertiefung (27) entleert und die Wassertiere (28) zusammen mit dem Wasser der jeweiligen Auffangvertiefung (27) von der Auffangsammelrinne (30) aufgefangen werden.

12. Siebbandmaschine (1) nach einem der vorhergehenden Ansprüche, **dadurch gekennzeichnet, dass** die Fischheberinnen (26) auf der Anströmseite jeweils eine Dammwand (32) aufweisen, die so hoch ist, dass sie in dem sich aufwärts bewegenden Abschnitt (9) des Endlossiebbandes (6) den Flüssigkeitsspiegel in der Auffangvertiefung (27) überragt, wenn die Auffangvertiefung (27) aus dem Flüssigkeitsstrom (5) herausgehoben ist, und sich in dem aufwärts bewegenden Abschnitt (9) des Endlossiebbandes (6) auf der stromabwärts gelegenen Seite der Dammwand (32) eine strömungsarme, strömungsfreie, wirbelarme oder wirbelfreie Zone in der Fischheberinne (26) bildet, wenn die Auffangvertiefung (26) in den Flüssigkeitsstrom (5) eingetaucht ist.

13. Siebbandmaschine (1) nach einem der vorhergehenden Ansprüche, **dadurch gekennzeichnet, dass** die Auffangsammelrinne (30) derart ausgebildet ist, dass sie permanent zumindest teilweise mit Flüssigkeit gefüllt ist.

14. Siebbandmaschine (1) nach einem der vorhergehenden Ansprüche, **dadurch gekennzeichnet, dass** die Antriebsvorrichtung zum Antreiben des Endlossiebbandes (6) im Reinigungsbereich (14) oder im Bereich der Schmutzsammelrinne (24) ausgebildet ist.

15. Siebbandmaschine (1) nach einem der vorhergehenden Ansprüche, **dadurch gekennzeichnet, dass** sie Siebfelder (4) mit einem Siebeinsatz (13) aufweist, der zur Reinwasserseite hin gewölbt ist.

## Claims

1. A traveling band screen machine (1) for mechanically depositing and extracting solid components, solid bodies or solid matter from a stream of liquid (5) flowing in a sluice channel, in particular a screen or filter rake for process water, cooling water or waste water streams or for use in sewage treatment plants or hydroelectric power stations or for use in a water supply channel (2) of a power station cooling water intake system (3), having
a plurality of screen panels (4) that form a revolving endless screen band (6) immersing into the stream of liquid (5) in which a plurality of screen panels (4) that are juxtaposed and arranged consecutively in the direction of movement (7) of the endless screen band (9), both in the downwardly moving section (8) of the endless screen band (6) and in the upwardly moving section (9) of the endless screen band (6), respectively form a common screen surface in the sluice channel,
wherein the direction of flow (10) is from the inside (11) of the endless screen band (6) through the screen panels (4) to the outside of the endless screen band (6) both for the downwardly moving section (8) of the endless screen band (6) and for the upwardly moving section (9) of the endless screen band (6),
a drive means for driving the endless screen band (6) in its direction of movement (7),
and a cleaning means arranged in the upper guidance zone (21) of the endless screen band (6) for cleaning screen panels (4) lifted out of the stream of liquid (5) in a cleaning zone (14) of the traveling band screen machine (1) by means of spray nozzles (23) or compressed air nozzles arranged on the outside of the endless screen band (6), and a debris collecting drain (24) arranged on the
inside of the endless screen band (6) opposite to the spray nozzles (23) or compressed air nozzles to collect debris sprayed off the endless screen band (6),
wherein the traveling band screen machine (1) comprises screen panels (4) that each have a fish lifting channel (26) on their inflow side, which is arranged and constructed such that
- it is located at the lower end of the upwardly moving screen panels (4);
- in the upwardly moving screen panels (4) it respectively forms a collecting recess (27) filled with liquid for aquatic animals (28) found in the respective screen panel (4), whereby upon movement of the endless screen band (6) with the screen panel (6), the liquid contained in the collecting recess (27) and aquatic animals (28) therein are lifted out of the stream of liquid (3) in the direction of movement (7) of the endless screen band (7); and
- in the upper guidance zone (21) of the endless screen band (6) it is emptied in an emptying zone (29) of the traveling band screen machine (1) into a catch collecting channel (30) by tilting the screen panel (4) and the collecting recess (27),
wherein the cleaning zone (14) is arranged so far behind the emptying zone (29) in the direction of movement (7) of the endless screen band (6) that the collecting recesses (27) are emptied before they reach the cleaning zone (14),
**characterized in that**
the catch collecting drain (30) is constructed separately from the debris collecting drain (24),
in the direction of movement (7) of the endless screen band (6), the catch collecting drain (30) is arranged in front of the debris collecting drain (24), so that the collecting recesses (27) of the fish lifting channels (26) with the aquatic animals (28) contained therein are emptied into the catch collecting drain (30) before the respective screen panel (4) reaches the cleaning zone (14),
the upper guidance (21) of the endless screen band (6) comprises two guidance bends arranged at a distance from each other, namely a first upper guidance bend (33) in the emptying zone (29) and a second upper guidance bend (34) in the cleaning zone (14),
the catch collecting drain (30) is arranged higher than the debris collecting drain (24), and
that the drive means (19) comprises a sprocket (20) arranged in the region of the upper guidance (21) and the catch collecting drain (30) is constructed separately from the debris collecting drain (24) such that the catch collecting drain (30) runs past the side of the sprocket (20).

2. The traveling band screen machine (1) according to claim 1, **characterized in that** the distance from the catch collecting drain (30) to the emptying zone (29) of the endless screen band (6) is smaller than the distance from the debris collecting drain (24) to the cleaning zone (14) of the endless screen band (6).

3. The traveling band screen machine (1) according to the preceding claim, **characterized in that** the distance from the catch collecting drain (30) to the emptying zone (29) of the endless screen band (6) is less than 80%, preferably less than 60% of the distance from the debris collecting drain (24) to the cleaning zone (14) of the endless screen band (6).

4. The traveling band screen machine (1) according to any one of the preceding claims, **characterized in that** the path curve of the endless screen band (6) in the emptying zone (29) is at approximately the same height as that in the cleaning zone (2).

5. The traveling band screen machine (1) according to any one of the preceding claims, **characterized in that** the radius of curvature of the path curve of the endless screen band (6) in the emptying zone (29) and in the cleaning zone (14) is smaller than in the zone therebetween.

6. The traveling band screen machine (1) according to any one of the preceding claims, **characterized in that** the collecting recesses (27) are constructed such that they are emptied into a catch collecting drain (30) only by tilting the screen panel (4) and the collecting recess (27) and gravity thereby acting on the water comprised in the collecting recess (27), without the screen panels (4) being cleaned thereby by means of the cleaning means.

7. The traveling band screen machine (1) according to any one of the preceding claims, **characterized in that** the collecting recesses (27) are constructed such that in the emptying zone (29), the water from the collecting recesses (27) together with the aquatic animals (28) therein is emptied into a catch collecting drain (30), preferably directly into the catch collecting drain (30).

8. The traveling band screen machine (1) according to any one of the preceding claims, **characterized in that** the collecting recesses (27) are constructed such that in the emptying zone (29), on emptying the collecting recesses (27), the aquatic animals (28) remain in the water of the collecting recesses (27) and are emptied together with the water emptied out of the collecting recesses (27) into the catch collecting drain (30), preferably directly into the catch collecting drain (30).

9. The traveling band screen machine (1) according to any one of the preceding claims, **characterized in that** the collecting recesses (27) are constructed such that in the emptying zone (29), both the aquatic animals (28) from a collecting recess (27) and the water from a collecting recess (27) are emptied into the catch collecting drain (30), preferably directly into the catch collecting drain (30).

10. The traveling band screen machine (1) according to any one of the preceding claims, **characterized in that** the collecting recesses (27) are constructed such that in the emptying zone (29), the aquatic animals (28) from a collecting recess (27) are not separated from the surrounding water from a collecting recess (27).

11. The traveling band screen machine (1) according to any one of the preceding claims, **characterized in that** the collecting recesses (27) are constructed such that in the emptying zone (29), the aquatic animals (28) together with the water from the respective collecting recess (27) are emptied out of the respective collecting recess (27) and the aquatic animals (28) together with the water of the respective collecting recess (27) are collected by the catch collecting drain (30).

12. The traveling band screen machine (1) according to any one of the preceding claims, **characterized in that** the fish lifting channels (26) each have a dam wall (32) on the inflow side that is sufficiently high to project above the level of the liquid in the collecting recess (27) in the upwardly moving section (9) of the endless screen band (6) when the collecting recess (27) is lifted out of the stream of liquid (5), and in the upwardly moving section (9) of the endless screen band (6), on the downstream side of the dam wall (32), forms a low-flow, no-flow, low-eddy or eddy-free zone in the fish lifting channel (26) when the collecting recess (26) is immersed in the stream of liquid (5).

13. The traveling band screen machine (1) according to any one of the preceding claims, **characterized in that** the catch collecting drain (30) is constructed such that it is permanently at least partially filled with liquid.

14. The traveling band screen machine (1) according to any one of the preceding claims, **characterized in that** the drive means for driving the endless screen band (6) is installed in the cleaning zone (14) or in the region of the debris collecting drain (24).

15. The traveling band screen machine (1) according to any one of the preceding claims, **characterized in that** it has screen panels (4) with a screen insert (13) that is convex on the clean water side.

## Revendications

1. Machine de tamis à bande mobile (1) destinée à déposer et à extraire mécaniquement des composants solides, des corps solides ou de la matière solide d'un flux de liquide (5) s'écoulant dans un canal à vanne, en particulier un tamis ou une raclette de filtration destiné à des flux d'eau de traitement, d'eau de refroidissement ou d'eaux usées ou à utiliser dans des usines d'épuration des eaux d'égout ou des centrales hydroélectriques ou à utiliser dans un canal d'alimentation en eau (2) d'un système d'admission d'eau de refroidissement de centrale électrique (3), ayant
une pluralité de panneaux de tamis (4) qui forment une bande de tamis sans fin tournante (6) s'immergeant dans le flux de liquide (5) dans lequel une pluralité de panneaux de tamis (4) qui sont juxtaposés et agencés consécutivement dans la direction de déplacement (7) de la bande de tamis sans fin (6), tous deux dans la section se déplaçant vers le bas (8) de la bande de tamis sans fin (6) et dans la section se déplaçant vers le haut (9) de la bande de tamis sans fin (6), forment respectivement une surface de tamis commune dans le canal à vanne,
dans lequel la direction d'écoulement (10) est de l'intérieur (11) de la bande de tamis sans fin (6) à travers les panneaux de tamis (4) vers l'extérieur de la bande de tamis sans fin (6) à la fois pour la section se déplaçant vers le bas (8) de la bande de tamis sans fin (6) et pour la section se déplaçant vers le haut (9) de la bande de tamis sans fin (6),
un moyen d'entraînement destiné à entraîner la bande de tamis sans fin (6) dans sa direction de déplacement (7),
et un moyen de nettoyage agencé dans la zone de guidage supérieure (21) de la bande de tamis sans fin (6) destiné à nettoyer les panneaux de tamis (4) soulevés hors du flux de liquide (5) dans une zone de nettoyage (14) de la machine de tamis à bande mobile (1) au moyen de buses de pulvérisation (23) ou de buses à air comprimé agencées sur l'extérieur de la bande de tamis sans fin (6), et un drain de collecte de débris (24) agencé sur l'intérieur de la bande de tamis sans fin (6) opposé aux buses de pulvérisation (23) ou aux buses à air comprimé afin de collecter des débris pulvérisés hors de la bande de tamis sans fin (6),
dans laquelle la machine de tamis à bande mobile (1) comprend des panneaux de tamis (4) qui ont chacun un canal de levage de poissons (26) sur leur côté débit entrant, qui est agencé et construit de sorte que
- il soit situé au niveau de l'extrémité inférieure des panneaux de tamis se déplaçant vers le haut (4) ;
- dans les panneaux de tamis se déplaçant vers le haut (4), il forme respectivement un évidement de collecte (27) rempli de liquide pour les animaux aquatiques (28) trouvés dans le panneau de tamis respectif (4), moyennant quoi lors d'un déplacement de la bande de tamis sans fin (6) avec le panneau de tamis (4), le liquide contenu dans l'évidement de collecte (27) et les animaux aquatiques (28) s'y situant sont soulevés hors du flux de liquide (5) dans la direction de déplacement (7) de la bande de tamis sans fin (6) ; et
- dans la zone de guidage supérieure (21) de la bande de tamis sans fin (6), il soit vidé dans une zone de vidage (29) de la machine de tamis à bande mobile (1) dans un canal de collecte de prise (30) en inclinant le panneau de tamis (4) et l'évidement de collecte (27), dans lequel la zone de nettoyage (14) est agencée si loin derrière la zone de vidage (29) dans la direction de déplacement (7) de la bande de tamis sans fin (6) que les évidements de collecte (27) sont vidés avant qu'ils atteignent la zone de nettoyage (14), **caractérisée en ce que**
le drain de collecte de prise (30) est construit séparément du drain de collecte de débris (24),
dans la direction de déplacement (7) de la bande de tamis sans fin (6), le drain de collecte de prise (30) est agencé devant le drain de collecte de débris (24), de sorte que les évidements de collecte (27) des canaux de levage de poissons (26) comprenant les animaux aquatiques (28) contenus à l'intérieur soient vidés dans le drain de collecte de prise (30) avant que le panneau de tamis respectif (4) atteigne la zone de nettoyage (14),
le guidage supérieur (21) de la bande de tamis sans fin (6) comprend deux coudes de guidage agencés à une distance l'un de l'autre, à savoir un premier coude de guidage supérieur (33) dans la zone de vidage (29) et un second coude de guidage supérieur (34) dans la zone de nettoyage (14),
le drain de collecte de prise (30) est agencé plus haut que le drain de collecte de débris (24), et
**en ce que** le moyen d'entraînement (19) comprend une roue dentée (20) agencée dans la région du guidage supérieur (21) et le drain de collecte de prise (30) est construit séparément du drain de collecte de débris (24) de sorte que le drain de collecte de débris (30) passe devant le côté de la roue dentée (20).

2. Machine de tamis à bande mobile (1) selon la revendication 1, **caractérisée en ce que** la distance entre le drain de collecte de prise (30) et la zone de vidage (29) de la bande de tamis sans fin (6) est plus petite que la distance entre le drain de collecte de débris (24) et la zone de nettoyage (14) de la bande de tamis sans fin (6).

3. Machine de tamis à bande mobile (1) selon la revendication précédente, **caractérisée en ce que** la distance entre le drain de collecte de prise (30) et la zone de vidage (29) de la bande de tamis sans fin (6) est inférieure à 80 %, de préférence inférieure à 60 % de la distance entre le drain de collecte de débris (24) et la zone de nettoyage (14) de la bande de tamis sans fin (6).

4. Machine de tamis à bande mobile (1) selon l'une quelconque des revendications précédentes, **caractérisée en ce que** la courbe de trajectoire de la bande de tamis sans fin (6) dans la zone de vidage (29) est approximativement à la même hauteur que celle dans la zone de nettoyage (2).

5. Machine de tamis à bande mobile (1) selon l'une quelconque des revendications précédentes, **caractérisée en ce que** le rayon de courbure de la courbe de trajectoire de la bande de tamis sans fin (6) dans la zone de vidage (29) et dans la zone de nettoyage (14) est plus petit que dans la zone entre ces dernières.

6. Machine de tamis à bande mobile (1) selon l'une quelconque des revendications précédentes, **caractérisée en ce que** les évidements de collecte (27) sont construits de sorte qu'ils soient vidés dans un drain de collecte de prise (30) uniquement en inclinant le panneau de tamis (4) et l'évidement de collecte (27) et la gravité agissant ainsi sur l'eau se trouvant dans l'évidement de collecte (27), sans que les panneaux de tamis (4) soient ainsi nettoyés au moyen du moyen de nettoyage.

7. Machine de tamis à bande mobile (1) selon l'une quelconque des revendications précédentes, **caractérisée en ce que** les évidements de collecte (27) sont construits de sorte que dans la zone de vidage (29), l'eau provenant des évidements de collecte (27) conjointement avec les animaux aquatiques (28) s'y trouvant soit vidée dans un drain de collecte de prise (30), de préférence directement dans le drain de collecte de prise (30).

8. Machine de tamis à bande mobile (1) selon l'une quelconque des revendications précédentes, **caractérisée en ce que** les évidements de collecte (27) sont construits de sorte que dans la zone de vidage (29), lors du vidage des évidements de collecte (27), les animaux aquatiques (28) restent dans l'eau des évidement de collecte (27) et soient vidés conjointement avec l'eau vidée des évidement de collecte (27) dans le drain de collecte de prise (30), de préférence directement dans le drain de collecte de prise (30).

9. Machine de tamis à bande mobile (1) selon l'une quelconque des revendications précédentes, **caractérisée en ce que** les évidements de collecte (27) sont construits de sorte que dans la zone de vidage (29), à la fois les animaux aquatiques (28) provenant d'un évidement de collecte (27) et l'eau provenant d'un évidement de collecte (27) soient vidés dans le drain de collecte de prise (30), de préférence directement dans le drain de collecte de prise (30).

10. Machine de tamis à bande mobile (1) selon l'une quelconque des revendications précédentes, **caractérisée en ce que** les évidements de collecte (27) sont construits de sorte que dans la zone de vidage (29), les animaux aquatiques (28) provenant d'un évidement de collecte (27) ne soient pas séparés de l'eau environnante provenant d'un évidement de collecte (27).

11. Machine de tamis à bande mobile (1) selon l'une quelconque des revendications précédentes, **caractérisée en ce que** les évidements de collecte (27) sont construits de sorte que dans la zone de vidage (29), les animaux aquatiques (28) conjointement avec l'eau de l'évidement de collecte respectif (27) soient vidés de l'évidement de collecte respectif (27) et les animaux aquatiques (28) conjointement avec l'eau de l'évidement de collecte respectif (27) soient collectés par le drain de collecte de prise (30).

12. Machine de tamis à bande mobile (1) selon l'une quelconque des revendications précédentes, **caractérisée en ce que** les canaux de levage de poissons (26) ont chacun une paroi de barrage (32) sur le côté débit entrant qui est suffisamment élevée pour faire saillie au-dessus du niveau du liquide dans l'évidement de collecte (27) dans la section se déplaçant vers le haut (9) de la bande de tamis sans fin (6) lorsque l'évidement de collecte (27) est soulevé hors du flux de liquide (5), et dans la section se déplaçant vers le haut (9) de la bande de tamis sans fin (6), sur le côté aval de la paroi de barrage (32), forme une zone de faible débit, sans débit, à faible remous ou sans remous dans le canal de levage de poissons (26) lorsque l'évidement de collecte (26) est immergé dans le flux de liquide (5).

13. Machine de tamis à bande mobile (1) selon l'une quelconque des revendications précédentes, **caractérisée en ce que** le drain de collecte de prise (30) est construit de sorte qu'il soit en permanence au moins partiellement rempli de liquide.

14. Machine de tamis à bande mobile (1) selon l'une quelconque des revendications précédentes, **caractérisée en ce que** le moyen d'entraînement destiné à entraîner la bande de tamis sans fin (6) est installé dans la zone de nettoyage (14) ou dans la région du drain de collecte de débris (24).

15. Machine de tamis à bande mobile (1) selon l'une quelconque des revendications précédentes, **caractérisée en ce qu'**elle comprend des panneaux de tamis (4) dotés d'un insert de tamis (13) qui est convexe sur le côté eau propre.
